# EUROPÄISCHE PATENTSCHRIFT

(11) **EP 0 802 680 B1**
(45) Veröffentlichungstag und Bekanntmachung des Hinweises auf die Patenterteilung: **14.02.2007**
(21) Anmeldenummer: 97201016.9
(22) Anmeldetag: 07.04.1997
(51) Int. Cl.: H04N 7/26, H04N 7/36

(54) **Verfahren zur Bildsegmentierung**
Image segmentation method
Procédé de segmentation d'images

(30) Priorität: 19.04.1996 DE 19615493
(43) Veröffentlichungstag der Anmeldung: 22.10.1997
(73) Patentinhaber: Philips Intellectual Property & Standards GmbH, 20099 Hamburg (DE); Koninklijke Philips Electronics N.V., 5621 BA Eindhoven (NL)
(72) Erfinder: Ibenthal, Achim, Röntgenstrasse 24, 22335 Hamburg (DE); Siggelkow, Sven, Röntgenstrasse 24, 22335 Hamburg (DE); Grigat, Rolf-Rainer, Prof.-Dr.-Ing., Röntgenstrasse 24, 22335 Hamburg (DE)
(74) Vertreter: von Laue, Hanns-Ulrich

(56) Entgegenhaltungen:
- US-A- 5 623 310
- SIGGELKOW S. ; GRIGAT R-R; IBENTHAL A.: "Segmentation of image sequences for object oriented coding" IMAGE PROCESSING, 1996. PROCEEDINGS, INTERNATIONAL CONFERENCE ON, Bd. 1, Nr. 1996, 16. - 19. September 1996, Seiten 477-480 vol.2, XP002138262
- SALEMBIER P ET AL: "REGION-BASED VIDEO CODING USING MATHEMATICAL MORPHOLOGY" PROCEEDINGS OF THE IEEE,US,IEEE. NEW YORK, Bd. 83, Nr. 6, 1. Juni 1995 (1995-06-01), Seiten 843-857, XP000518739 ISSN: 0018-9219

## Beschreibung

Die Erfindung betrifft ein Verfahren zur Segmentierung von Bildern eines Bildsignals, wobei innerhalb eines Bildes eine Zerlegung des Bildes in Regionen vorgenommen wird, in denen benachbarte Bildpunkte zusammengefasst werden.

Derartige Verfahren zur Bildsegmentierung werden für eine sogenannte objektorientierte Kodierung eingesetzt. Im Gegensatz zu der zum Beispiel bei der MPEG2-Kodierung eingesetzten geometrischen Aufteilung des Bildes und der anschließenden Kodierung der geometrischen Einzelelemente wird bei der objektorientierten Kodierung versucht, eine Einteilung des Bildes anhand des Bildinhaltes also der in diesem Bild wiedergegebenen Objekte vorzunehmen. Dies hat den Vorteil, dass zwischen den Blöcken auftretende Übergangseffekte nicht störend in Erscheinung treten, da sie mit den Objektgrenzen zusammenfallen.

Ein Verfahren zur Segmentierung für eine objektorientierte Kodierung ist beispielsweise aus "Region-based video coding using mathematical morphology", Philippe Salembier, Luis Torres, Fernand Meyer, Chuang Gu, Proceedings of the IEEE, Vol. 83, No. 6, pp-843-857, June 1995, bekannt. Bei diesem bekannten Verfahren wird ein Bild in Abhängigkeit der Helligkeitswerte des Bildinhaltes segmentiert.

Aus "Segmented coding of digital image sequences", IEEE Proceedings I. Solid Stae & Electron Devices, Institution of Electrical Engineers, Stevenage, GB, ISSN 0956-3776, Vol. 139, Nr.2, Part1, 212-218, 01-04-1992, ist eine segmentierte Kodierung von digitalen Bildfolgen bekannt, bei der eine Regionenbildung anhand von Y, U und V- Werten der Bilder vorgenommen wird.

Es ist Aufgabe der Erfindung, ein Verfahren zur Bildsegmentierung anzugeben, bei dem eine noch höhere Datenkompression einerseits und eine möglichst geringe visuelle Wahrnehmbarkeit der Segmentierung nach Kodierung und Dekodierung der Daten sichtbar ist.

Diese Aufgabe ist erfindungsgemäß durch die Merkmale des Patentanspruchs 1 gelöst.

Der Erfindung liegt die Erkenntnis zugrunde, dass für die objektorientierte Kodierung und damit für die dieser vorausgehenden Segmentierung des Bildes eine noch höhere Datenreduktion als bei den bekannten Verfahren insbesondere dadurch erreicht werden kann, dass für die Regionenbildung schwerpunktmäßig die Farbartwerte der Bildpunkte herangezogen werden. Dies wird dadurch möglich, dass das menschliche Auge auf Farbreize sehr viel unempfindlicher als auf Helligkeitsinformationen reagiert. Es kann daher so weit gegangen werden, pro Region nur noch einen Farbartwert für alle Bildpunkte, die der Region angehören, vorzusehen. Es werden dazu diejenigen zusammenhängenden benachbarten Bildpunkte jeweils zu einer Region zusammengezogen, die ähnliche Farbartwerte innerhalb vorgebbarer Grenzen aufweisen. Es wird damit für alle Bildpunkte einer Region nur noch ein Farbwert angesetzt, was aufgrund der oben genannten Zusammenhänge möglich ist.

Durch dieses Vorgehen wird das Auge erfolgreich getäuscht und es kann für die Farbinformation eine Reduzierung um einen Faktor 300 bis 600 erreicht werden. Hierbei ist zu beachten, dass es zu keinerlei Verschleifung von Farbflanken oder ähnlichem kommt, da die Kanten zwischen Übergängen verschiedener Farben Kanten zwischen verschiedenen Regionen bilden und somit exakt definiert werden. Lediglich innerhalb von Feldern ähnlicher Farbe werden feine Farbnuancen unterdrückt. Auf diese reagiert das Auge ohnehin unempfindlich.

Gegebebenenfalls können neben den Farbartwerten auch die Helliglceitswerte der Bildpunkte für die Bildung der Regionen herangezogen werden, sie sollten dann jedoch schwächer gewichtet werden als deren Farbart-Werte, um die oben genannten Vorteile zu erhalten.

Die Bildung der Regionen mit gemeinsamem Farbart-Wert aller Bildpunkte einer Region wird in zwei Stufen in der Weise vorgenommen, dass in einer ersten Stufe Zwischenregionen gebildet werden, bei deren Generierung sowohl die Farbart- wie auch die Helligkeits-Werte der Bildpunkte herangezogen werden, und dass in einer zweiten Stufe aus den Zwischenregionen die Regionen in der Weise gebildet werden, dass die Zwischenregionen zu Regionen zusammengefasst werden, wobei Zwischenregionen mit ähnlichen Farbart-Werten zu einer gemeinsamen Region mit einem gemeinsamem Farbart-Wert zusammengefasst werden.

Bei dieser zweistufigen Vorgehensweise wird im Ergebnis erreicht, dass die Regionenbildung anhand der Farbart-Werte der Bildpunkte erfolgt.

Es wird in einer ersten Stufe beispielsweise eine Regionenbildung in an sich bekannter Weise vorgenommen, bei deren Generierung sowohl die Farbart- wie auch die Helligkeits-Werte der Bildpunkte herangezogen werden. Es entsteht damit eine Segmentierung, die sich an beiden Werten orientiert. Diese Zwischenregionen werden ausschließlich bezüglich ihrer Farbart-Werte dahingehend zusammengefasst, dass Zwischenregionen, die innerhalb vorgebbarer Grenze ähnliche Farbart-Werte aufweisen, zu jeweils einer gemeinsamen Region zusammengefasst werden. Diese gemeinsame Region hat dann einen Farbart-Wert für alle Bildpunkte dieser Region.

Diese zweistufige Vorgehensweise hat den Vorteil, dass in der ersten Stufe die Regionenbildung noch sicherer die Objektgrenzen erfassen kann, da dort auch die Helligkeits-Werte mit herangezogen werden. Für die Bildung der Regionen werden dann die auf diese Weise gebildeten Zwischenregionen nochmals zusammengefasst, so dass im Endeffekt der gewünschte Effekt der Reduzierung der Zahl der Regionen und damit der Datenmenge erreicht wird.

Der einer Region zugewiesene Farbartwert kann vorteilhafterweise, wie gemäß einer Ausgestaltung der Erfindung vorgesehen ist, dem Mittelwert der ursprünglichen Farbartwerte der der Region zugeschlagenen Bildpunkte entsprechen. Es wird damit eine im Mittel möglichst geringe Abweichung des Farbartwertes der Region von den ursprünglichen Farbartwerten der ihr zugehörenden Bildpunkte erreicht.

Für die Bildung der Regionen in zwei Stufen ist gemäß einer weiteren Ausgestaltung der Erfindung vorgesehen, dass in der ersten Stufe für aufeinanderfolgende Bilder eine Bewegungsschätzung der Zwischenregionen in einem Bild Iₙ und dem nachfolgenden Bild Iₙ₊₁ vorgenommen wird, dass anhand der für jede Zwischenregion mittels der Bewegungsschätzung ermittelten Bewegungsvektoren die neue Position der Zwischenregion in dem Bild Iₙ₊₁ ermittelt wird, dass nachfolgend eine Anpassung der zu jeder verschobenen Zwischenregion gehörenden Bildpunkte des Bildes Iₙ₊₁ vorgenommen wird, dass nicht von diesen angepassten Zwischenregionen erfasste Bildpunkte des Bildes Iₙ₊₁ einer dieser Zwischenregionen oder neu gebildeten Zwischenregionen zugeschlagen werden und dass nachfolgend in der zweiten Stufe die Zwischenregionen zu Regionen zusammengefasst werden.

Die zunächst in der ersten Stufe gebildeten Zwischenregionen müssen grundsätzlich nicht in jedem Bild neu generiert werden. Da im allgemeinen die Bildinhalte aufeinanderfolgender Bilder sehr ähnlich sind (abgesehen von Kamerawechseln, Szenenwechseln oder ähnlichem) besteht die Möglichkeit aufgrund der Bewegungsschätzung eine Region in einem nachfolgenden Bild wieder aufzufinden, selbst wenn sie ihre Position im Bild verändert haben sollte. Durch dieses Wiederauffinden der Region mittels der Bewegungsschätzung muss diese nicht neu gebildet werden, sondern ihre Daten können aus dem vorherigen Bild übernommen werden. Damit wird eine Verringerung des Codierungsaufwandes des Rechenaufwandes und damit der Rechenzeit erzielt. Die auf diese Weise in aufeinanderfolgenden Bildern verfolgten Zwischenregionen werden in oben beschriebener Weise jeweils zu Regionen zusammengefaßt, wobei Zwischenregionen mit ähnlichen Farbart-Werten zu einer gemeinsamen Region mit nur einem Farbart-Wert verschmolzen werden.

Für diese zweistufige Vorgehensweise mit Einsatz der Bewegungsschätzung bei der Verfolgung der Zwischenregionen ist für eine weitere Ausgestaltung der Erfindung vorgesehen, daß für aufeinanderfolgende Bilder in einem Bild Iₙ₊₁ die in dem vorherigen Bild Iₙ zu einer zugeordneten Region zusammengefaßten Zwischenregionen wieder aufgesucht werden, wobei zwischen den Bildern Iₙ und Iₙ₊₁ bewegte Zwischenregionen mit Hilfe der Bewegungsinformation wieder aufgefunden werden, daß eine Verschmelzung dieser Zwischenregionen zu der gleichen zugeordneten Region versucht wird und daß für diejenigen Zwischenregionen, für die dies nicht gelingt, eine Verschmelzung zu anderen oder neuen Regionen vorgenommen wird.

Durch die Verfolgung der Zwischenregionen in aufeinanderfolgenden Bildern mittels der Bewegungsschätzung werden im allgemeinen zu einer Region verschmolzene Zwischenregionen auch in einem nachfolgenden Bild wieder aufgefunden. Es besteht damit auch bei der Verschmelzung der Zwischenregionen zu den Regionen die Möglichkeit, in aufeinanderfolgenden Bildern wieder die gleichen, gegebenenfalls in dem Bild bewegten, Zwischenregionen wieder zu der gemeinsamen Region zu verschmelzen. Damit tritt auch für diesen Verarbeitungsschritt der Vorteil auf, daß die Zwischenregionen wieder aufgefunden werden können und die Verschmelzung dieser zu der Region in der gleichen Weise vorgenommen werden kann wie im vorherigen Bild. Damit muß auch hier keine erneute Berechnung erfolgen. Diejenigen Regionen, für die dies nicht gelingt, beispielsweise weil Zwischenregionen nicht im Bildinhalt vorhanden sind oder neue Zwischenregionen auftauchen, wird eine Verschmelzung zu anderen Regionen vorgenommen oder es wird eine oder mehrere neue Regionen gebildet, in denen dann die übrig gebliebenen Zwischenregionen verschmolzen werden können.

Gemäß einer weiteren Ausgestaltung der Erfindung ist vorgesehen, daß die Kodierung der Form der Regionen mittels eines Kettenkodes vorgenommen wird, bei dem die Position eines Ausgangs-Bildpunktes der Kante einer Region vollständig kodiert wird und bei dem die Positionen der übrigen Bildpunkte der. Kante der Region nacheinander ausgehend von dem Ausgangsbildpunkt in der Weise kodiert werden, daß jeweils nur kodiert wird, ob der betreffende Bildpunkt links neben, rechts neben,' oberhalb oder unterhalb des zuvor kodierten Bildpunktes angeordnet ist.

Neben der Kodierung der Bildpunkte bezüglich deren Helligkeit und deren Farbart ist auch eine Kodierung der Form der Segmente erforderlich. Eine datensparende Art der Kodierung der Form der Regionen ist mittels eines Kettenkodes möglich. Hier wird nur von einem Ausgangsbildpunkt die vollständige Positionsangabe dieses Bildpunktes kodiert. Dieser Ausgangsbildpunkt liegt auf der Kante einer Region. Ausgehend von diesem Ausgangsbildpunkt wird dann für jeden weiteren diesem benachbarten Bildpunkt der Kante der Region nur eine relative Kodierung der Nachbarn vorgenommen. Der dem Ausgangsbildpunkt benachbarte Bildpunkt wird nur darauf kodiert, ob er oberhalb, unterhalb, links neben oder rechts neben dem Ausgangsbildpunkt liegt. Dieses Verfahren wiederholt sich dann für jeden weiteren benachbarten Bildpunkt der Kante, bis die gesamten Bildpunkte der Kante der Region auf diese Weise kodiert sind. Auf diese Weise genügt abgesehen von dem Ausgangsbildpunkt eine 2-Bit-Kodierung für jeden weiteren Bildpunkt auf der Kante einer Region.

Die Erfindung wird nachfolgend anhand der Zeichnung näher erläutert. Es zeigen:
Fig. 1 eine schematische Blockdarstellung für die zweistufige Segmentierung,
Fig. 2 ein Bildbeispiel für die zweistufige Kodierung,
Fig. 3 ein Beispiel gemäß Fig. 2, wobei in Fig. 3 ein Folgebild des in Fig. 2 dargestellten Bildes mit erfolgter Bewegung dargestellt ist, und
Fig. 4 eine schematische Darstellung entsprechend Fig. 1, in der zusätzlich eine Bewegungsschätzung für die Bildung der Zwischenregionen und eine Weiterverfolgung der Regionen in aufeinanderfolgenden Bildern vorgenommen wird.

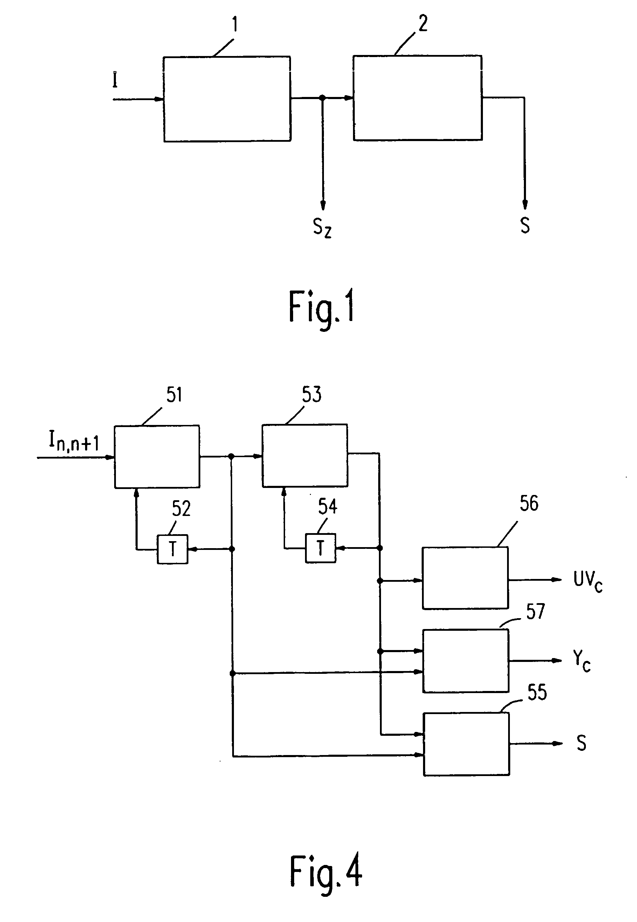

Fig. 1 zeigt eine schematische Darstellung der Vorgehensweise bei der zweistufigen Kodierung. In dem einfacheren Fall der zweistufigen Kodierung wird keine Berücksichtigung der Bildinhalte aufeinanderfolgender Bilder vorgenommen. Entsprechend der Darstellung in Fig. 1 gelangt ein Signal I, das den Bildinhalt eines Bildes ggf. mehrerer aufeinanderfolgender Bilder enthält, zunächst zu einer Stufe 1, in der eine erste Unterteilung des Bildinhaltes in Zwischensegmente vorgenommen wird. Dies kann beispielsweise in an sich bekannter Weise durch Berücksichtigung der Helligkeits- und der Farbwerte der Bildpunkte des Bildinhaltes geschehen. Dem Ausgangssignal liefert der Block ein Labelbild, in dem alle Punkte einer Zwischenregion i mit der Nummer i gekennzeichnet sind.

Diese Daten der Zwischenregionen werden in einem weiteren Schaltungsblock 2 dahingehend verarbeitet, daß überprüft wird, welche Farbart-Werte die Bildpunkte der Regionen aufweisen. Unter den Zwischenregionen gibt es wahrscheinlich solche, die ähnliche Farbart-Werte ihrer Bildpunkte aufweisen. Diese Zwischenregionen werden dann zu Regionen verschmolzen. Für jede dieser Regionen ist nur noch ein Farbart-Wert für alle Bildpunkte dieser Region vorgesehen. Der Schaltungsblock 2 der Darstellung gemäß Fig. 1 liefert ausgangsseitig diese Daten S der Regionen.

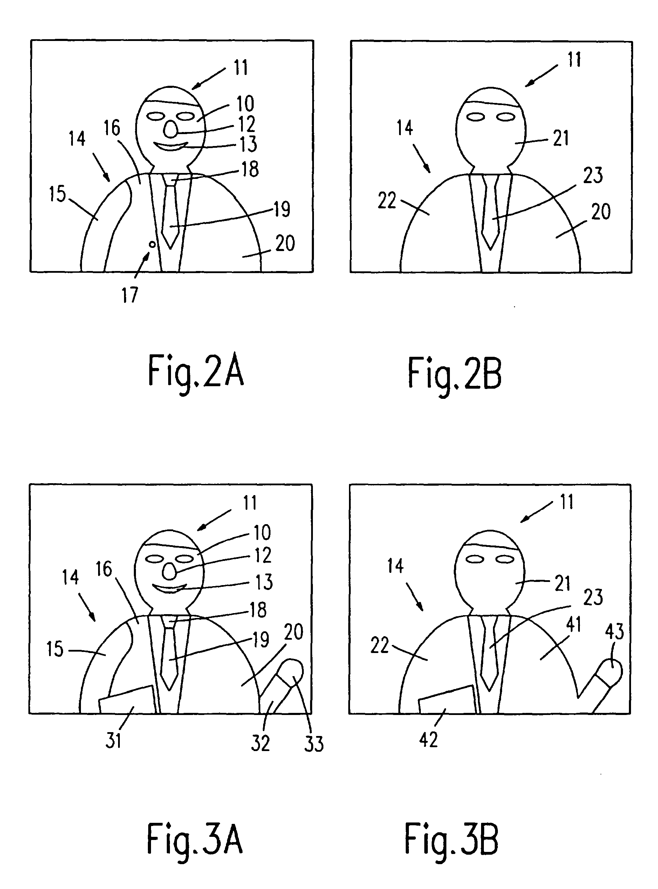

Diese zweistufige Art der Bildung der anhand der Farbart-Werte orientierten Regionen wird nachfolgend anhand Fig. 2 näher erläutert.

Dabei zeigt Fig. 2A ein Bild mit eingetragenen Zwischenregionen, wie sie in der ersten Stufe des Verfahrens gewonnen werden können. Fig. 2B zeigt die endgültigen Regionen, die anhand der Farbartwerte gebildet worden sind.

In der Darstellung gemäß Fig. 2A sind für das dargestellte Brustbild einer Person eine Vielzahl von Zwischenregionen gebildet worden. Alleine für den Kopf 11 der dargestellten Person sind sechs Zwischenregionen gebildet worden, insbesondere neben der Gesichtshaut 10 auch eine eigene Zwischenregion 12 für die Nase und eine Zwischenregion 13 für den Mund der dargestellten Person.

Im Brustbereich 14 sind insgesamt sieben Zwischenregionen gebildet worden, insbesondere eine Region 15 für den Arm der Person bzw. den Ärmel und eine Region 16 für die rechte Brusthälfte. Im Bereich dieser Region 16 findet sich eine weitere Zwischenregion 17, die beispielsweise einen Knopf an der Jacke 16 darstellt.

Diese Zwischenregionen sind sowohl anhand der Helligkeits- wie auch der Farbwerte des Bildinhaltes gebildet worden. Um eine noch höhere Datenreduktion insbesondere der Farbart-Werte zu erzielen, wird erfindungsgemäß eine Verschmelzung zu Regionen vorgenommen, wie sie in Fig. 2B eingetragen sind. Die Bildung dieser in Fig. 2B eingetragenen Regionen kann auch statt der Darstellung in Fig. 2, bei der in zweistufiger Weise vorgegangen wird, sofort aus dem ursprünglichen Bildinhalt generiert werden.

Die Darstellung gemäß Fig. 2B zeigt u.a., daß für den Kopfbereich gegenüber den Zwischenregionen zwei Regionen eingespart werden konnten. So sind die Zwischenregionen 12 der Nase und 13 des Mundes der Zwischenregion 10, die den übrigen Gesichtsinhalt wiedergibt, zugeschlagen worden. Aus diesen drei Zwischenregionen 10, 12 und 13 ist in der Darstellung gemäß Fig. 2B eine Region 21 geworden, wobei alle Bildpunkte der Region 21 einen gemeinsamen Farbart-Wert aufweisen. Dieser Farbart-Wert kann beispielsweise durch Mittelbildung der Farbart-Werte der Regionen 10, 12 und 13 entstanden sein. In ähnlicher Weise hat im Brustbereich eine Verschmelzung der Regionen 15, 16 und 17 zu einer neuen Region 22 stattgefunden. Dies ist, ähnlich wie im Gesichtsbereich, möglich, weil es sich bei den Zwischenregionen 15, 16 und 17 um solche handelte, die ähnliche Farbartwerte aufweisen. In diesem Beispiel handelt es sich um verschiedene Teile der Jacke, die sich mehr durch Helligkeitswerte als durch Farbwerte unterscheiden.

In entsprechender Weise konnte im Brustbereich eine weitere Reduzierung der Daten durch Verschmelzung zweier in Fig. 2A eingetragener Zwischenregionen 18 und 19 erzielt werden, die Teile der Krawatte der Person darstellen. Diese Krawatte ist nunmehr durch eine gemeinsame Region 23 wiedergegeben.

Im Ergebnis zeigt die Fig. 2B die gebildeten Regionen, die diejenigen Bildinhalte wiedergeben, die ähnliche Farbart-Werte aufweisen. Für eine vorzunehmene Kodierung der Daten des Bildes ist diese Regionenbildung hilfreich, da durch die Regionenbildung einerseits die Grenzen verschiedener der in dem Bild dargestellter Objekte aufgezeigt werden, und da zum anderen bereits durch die Regionenbildung eine beträchtliche Datenreduktion der Farbwerte erzielt wird. Für die nachfolgende Kodierung sind dann nur noch die Helligkeitswerte der Bildpunkte in geeigneter Weise zu kodieren.

Bei der Darstellung gemäß Fig. 2 wurde innerhalb eines Bildes eine zweistufige Kodierung vorgenommen, ohne die Bildinhalte vorhergehender oder nachfolgender Bilder zu berücksichtigen.

Nachfolgend soll anhand der Darstellung der Fig. 2 und 3 aufgezeigt werden, auf welche Weise zusätzlich eine Berücksichtigung der Bildinhalte aufeinanderfolgender Bilder erfolgen kann, und wie sich diese auf die Bildung der Zwischenregionen und der Regionen auswirkt.

In Fig. 3A ist eine Darstellung entsprechend Fig. 2A angedeutet. Bei dem in Fig. 3A dargestellten Bildinhalt handelt es sich um das dem Bild Fig. 2A nachfolgende Bild. Für die Bildung der Zwischenregionen des Bildes entsprechend Fig. 3A wird anhand einer Bewegungsschätzung eine Verfolgung der in Fig. 2A gebildeten Zwischenregionen vorgenommen. Mittels dieser Bewegungsschätzung können in dem dargestellten Beispiel die meisten Zwischenregionen wieder aufgefunden werden. In dem Beispiel der Fig. 2A und 3A hat sich die dargestellte Person wenig bewegt. Aufgrund der Bewegungsschätzung würde eine Weiterverfolgung der Zwischenregionen selbst dann noch gelingen, wenn sich die Person beispielsweise von der linken Bildhälfte auf die rechte Bildhälfte bewegt hätte.

In dem Beispielsfall gemäß Fig. 3A konnten alle Zwischenregionen mit Ausnahme der Zwischenregion 17 der Fig. 2A wieder aufgefunden werden. Die Zwischenregion 17 entsprechend Fig. 2A konnte nicht wieder aufgefunden werden, da sich vor die Brust der dargestellten Person ein Blatt geschoben hat, das für die Segmentierung des in Fig. 3A dargestellten Bildes zu einer neuen Zwischenregion 31 zusammengefaßt wurde. In dem Bild entsprechend Fig. 3A ist ferner ein Arm aufgetaucht, dessen Ärmel zu einer Zwischenregion 32 und dessen Hand zu einer Zwischenregion 33 zusammengefaßt werden.

Im Ergebnis mußten für das in Fig. 3A dargestellte Bild nur drei Zwischenregionen 31, 32 und 33 neu gebildet werden. Die übrigen Zwischenregionen konnten aus Fig. 2A übernommen werden. Damit wird eine beträchtliche Reduzierung an Rechenaufwand erreicht, da die Daten der Zwischenregionen 10 bis 16 und 18 und 19 übernommen werden konnten.

Auch für die in Fig. 3B dargestellte Bildung der Regionen, die anhand der Farbart-Werte der Bildpunkte vorgenommen wird, gilt, daß versucht wird, in einem vorhergehenden Bild gebildete Regionen wieder aufzufinden und zu übernehmen.

Aus dem in Fig. 2 dargestellten Segmentierungsvorgang des vorherigen Bildes ist beispielsweise bekannt, daß die Zwischenregionen 12, 13 und 10 zu einer neuen gemeinsamen Region 21 verschmolzen werden können. Daher kann für das nachfolgende Bild entsprechend Fig. 3 für die Bildung der Regionen dieser Vorgang wiederholt werden. Ggf. kann dabei auf eine einzelne Überprüfung der Farbartwerte der Zwischenregionen bzw. von deren Bildpunkten verzichtet werden. Für das in Fig. 3B dargestellte Folgebild mit den Regionen wird diese Segmentierung automatisch aus dem Vorbild übernommen, da die zugehörigen Zwischenregionen 10, 12 und 13 entsprechend der Darstellung gemäß Fig. 3A wieder aufgefunden wurden und somit die Zusammenfassung dieser Zwischenregionen zu der gemeinsamen Region 21 auch für das in Fig. 3 dargestellte Folgebild übernommen werden kann.

Grundsätzlich gelingt in dem in Fig. 3 als Folgebild zu dem in Fig. 2 dargestellten Bild auch, die Zwischenregionen 15 und 16 zu der neuen Region 22 zu verschmelzen. Die Zwischenregion 17 ist jedoch weggefallen, und kann daher nicht mehr dieser Region 22 zugeschlagen werden. Statt dessen ist eine neue Zwischenregion 31 aufgetaucht, die keiner anderen Zwischenregion zugeschlagen werden kann und daher eine neue Region 42 bildet. Der Grund hierfür liegt beispielsweise darin, daß das Blatt eine deutlich andere Farbe aufweist als seine Umgebung und daher insbesondere nicht der Region 22 zugeschlagen werden kann.

Die Zwischenregion 20, die in der Darstellung gemäß Fig. 2 unverändert zu einer Region 20 übernommen wurde, kann in der Darstellung gemäß Fig. 3 aufgrund des zusätzlich auftauchenden Armes mit der durch den Ärmel gebildeten Zwischenregion 32 zu einer neuen Region 41 verschmolzen werden. Die Hand 33 weist eine andere Farbe auf als die sie umgebenden Bereiche, so daß die Zwischenregion 33 zu einer neuen Region 43 werden muß.

Im Ergebnis zeigt die Darstellung gemäß Fig. 3, daß sowohl in der ersten Stufe wie auch in der zweiten Stufe eine Berücksichtigung der Bildinhalte des Vorbildes und der in diesen gebildeten Zwischenregionen bzw. Regionen für die Segmentierung des nachfolgenden Bildes entsprechend Fig. 3A vorgenommen werden kann. Es wird damit für eine Vielzahl von Regionen und auch Zwischenregionen deren neue Berechnung hinfällig, da die zugehörigen Daten aus dem Vorbild übernommen werden können.

Fig. 4 zeigt in schematischer Blockdarstellung, wie eine derartige zweistufige Segmentierung, bei der eine Berücksichtigung der Bildinhalte vorhergehender Bilder erfolgt, vorgenommen werden kann.

In Fig. 4 werden einem Schaltungsblock 51 nacheinander die Daten aufeinanderfolgender Bilder Iₙ, Iₙ₊₁ usw. zugeführt. In dem Schaltungsblock 51 findet entsprechend dem Schaltungsblock 1 gemäß Fig. 1 eine Bildung der Zwischenregionen statt. Die dabei erzeugten Ausgangsdaten werden über ein Verzögerungsglied 52 wiederum dem Schaltungsblock 51 zugeführt, damit beispielsweise für ein Bild Iₙ₊₁ die im Vorbild Iₙ ermittelten Zwischenregionen zur Verfügung stehen und deren Daten für die Bewegungsschätzung herangezogen werden können.

Dem Schaltungsblock 51 ist ein Schaltungsblock 53 nachgeschaltet, in dem entsprechend dem Schaltungsblock 2 der Darstellung gemäß Fig. 1 eine Bildung von Regionen vorgenommen wird. Im Unterschied zu dem in Fig. 1 dargestellten Fall wird jedoch in der Darstellung gemäß Fig. 4 eine Berücksichtigung der Zwischenregionen und der Regionen des Vorbildes vorgenommen. Der Schaltungsblock 53 liefert ausgangsseitig auch Daten, die angeben, aus welchen Zwischenregionen sich eine Region zusammensetzt. Die von dem Schaltungsblock 53 ausgangsseitig gelieferten Daten für die Regionen eines Bildes werden mittels eines Verzögerungsgliedes verzögert, so daß beispielsweise für die Bildung der Regionen eines Bildes Iₙ₊₁ die in dem vorherigen Bild Iₙ gebildeten Regionen zur Verfügung stehen.

Die Darstellung gemäß Fig. 4 zeigt ferner einen Schaltungsblock 55, der die Form und Anordnung der Regionen kodiert und als Regionendaten S ausgibt. Eine derartige Kodierung der Regionendaten gibt deren Lage, Größe etc. an. Hier ist es vorteilhaft, einen sogenannten Kettenkode einzusetzen, der die Position aller Randpunkte einer Region angibt. Dabei wird ausgehend von einem Ausgangsbildpunkt, dessen Position vollständig kodiert übertragen wird, jeweils für benachbarte Bildpunkte nur deren relative Position über, unter, links neben oder rechts neben dem jeweils benachbarten Bildpunkt übertragen.

Fig. 4 zeigt ferner einen Schaltungsblock 56, in dem eine Kodierung der Farbdaten vorgenommen wird. Da die Segmentierung und insbesondere die Bildung der Regionen vorher in der Weise erfolgt ist, daß alle zu einer Region zugehörigen Bildpunkte nur noch einen gemeinsamen Farbart-Wert aufweisen, ist hier eine Kodierung nur noch regionenweise erforderlich. Der Schaltungsblock 56 erzeugt daher für jede Region beispielweise ein Farbdifferenzpaar UV_{C}, das die kodierte Farbinformation für alle Bildpunkte einer Region angibt.

Ferner ist ein Schaltungsblock 57 vorgesehen, der die Helligkeits-Werte der Bildpunkte in kodierter Form als Signal Y_{C} ausgibt. Für die Kodierung der HelligkeitsInformation können gegebenenfalls sowohl die Daten der Zwischenregionen wie auch der Regionen herangezogen werden. Für die Helligkeitsinformation muß gegebenenfalls eine detailliertere Kodierung der einzelnen Werte der Bildpunkte vorgenommen werden, so daß nicht alle Bildpunkte einer Region mit dem gleichen Helligkeitswert kodiert werden können.

Die Darstellung gemäß Fig. 4 zeigt anhand der schematischen Darstellung der Schaltungsblöcke 51 bis 54 die erfindungsgemäße Bildsegmentierung. Die Kodierung der Bildinhalte, die in dem Schaltungsblock 57 vorgenommen wird, ist nicht Gegenstand der Erfindung.

## Patentansprüche

1. Verfahren zur Segmentierung von Bildern eines Bildsignals, wobei innerhalb eines Bildes eine Zerlegung des Bildes in Regionen vorgenommen wird, in denen benachbarte Bildpunkte zusammengefasst werden, **dadurch gekennzeichnet,**
- **dass** für die Regionenbildung die Farbart-Werte der Bildpunkte herangezogen werden, dass diejenigen benachbarten Bildpunkte eines Bildes zu einer zusammenhängenden Region zusammengefasst werden, die ähnliche Farbart-Werte aufweisen, dass für die Bildpunkte einer Region ein gemeinsamer Farbart-Wert vorgesehen ist,
- **dass** für die Bildung der Regionen die Farbart-Werte der Bildpunkte stärker gewichtet werden als deren Helligkeits-Werte,
- und **dass** die Bildung der Regionen mit gemeinsamem Farbart-Wert aller Bildpunkte einer Region in zwei Stufen in der Weise vorgenommen wird, dass in einer ersten Stufe Zwischenregionen gebildet werden, bei deren Generierung sowohl die Farbart- wie auch die Helligkeits-Werte der Bildpunkte herangezogen werden, und dass in einer zweiten Stufe aus den Zwischenregionen die Regionen in der Weise gebildet werden, dass die Zwischenregionen zu Regionen zusammengefasst werden, wobei Zwischenregionen mit ähnlichen Farbart-Werten zu einer gemeinsamen Region mit einem gemeinsamem Farbart-Wert zusammengefasst werden.

2. Verfahren nach Anspruch 1, **dadurch gekennzeichnet,**
**dass** der gemeinsame Farbart-Wert einer Region dem Mittelwert der ursprünglichen Farbart-Werte der der Region zugeschlagenen Bildpunkte entspricht.

3. Verfahren nach Anspruch 1 oder 2, **dadurch gekennzeichnet,**
**dass** in der ersten Stufe für aufeinanderfolgende Bilder eine Bewegungsschätzung der Zwischenregionen in einem Bild Iₙ und dem nachfolgenden Bild Iₙ₊₁ vorgenommen wird, dass anhand der für jede Zwischenregion mittels der Bewegungsschätzung ermittelten Bewegungsvektoren die neue Position der Zwischenregion in dem Bild Iₙ₊₁ ermittelt wird, dass nachfolgend eine Anpassung der zu jeder verschobenen Zwischenregion gehörenden Bildpunkte des Bildes Iₙ₊₁ vorgenommen wird, dass nicht von diesen angepassten Zwischenregionen erfasste Bildpunkte des Bildes Iₙ₊₁ einer dieser Zwischenregionen oder neu gebildeten Zwischenregionen zugeschlagen werden und dass nachfolgend in der zweiten Stufe die Zwischenregionen zu Regionen zusammengefasst werden.

4. Verfahren nach Anspruch 3, **dadurch gekennzeichnet,**
**dass** für aufeinanderfolgende Bilder in einem Bild Iₙ₊₁ die in dem vorherigen Bild Iₙ zu einer zugeordneten Region zusammengefassten Zwischenregionen wieder aufgesucht werden, wobei zwischen den Bildern Iₙ und Iₙ₊₁ bewegte Zwischenregionen mit Hilfe der Bewegungsinformation wieder aufgefunden werden, das eine Verschmelzung dieser Zwischenregionen zu der gleichen zugeordneten Region versucht wird und dass für diejenigen Zwischenregionen, für die dies nicht gelingt, eine Verschmelzung zu anderen oder neuen Regionen vorgenommen wird.

5. Verfahren nach einem der Ansprüche 1 bis 4, **dadurch gekennzeichnet,**
**dass** der Farbart-Wert jeder Region durch ein Farbdifferenzwertpaar U,V repräsentiert und kodiert wird.

6. Verfahren nach einem der Ansprüche 1 bis 5, **dadurch gekennzeichnet,**
**dass** die Kodierung der Form der Regionen mittels eines Kettenkodes vorgenommen wird, bei dem die Position eines Ausgangs-Bildpunktes der Kante einer Region vollständig kodiert wird und bei dem die Positionen der übrigen Bildpunkte der Kante der Region nacheinander ausgehend von dem Ausgangsbildpunkt in der Weise kodiert werden, dass jeweils nur kodiert wird, ob der betreffende Bildpunkt links neben, rechts neben, oberhalb oder unterhalb des zuvor kodierten Bildpunktes angeordnet ist.

## Claims

1. A method of segmenting images of a picture signal, in which, within an image, the image is split up into regions in which adjacent pixels are combined,
**characterized in that**
- the chrominance values of the pixels are utilized for forming the regions, **in that** those adjacent pixels of an image which have similar chrominance values are combined to a coherent region, and **in that** a common chrominance value is provided for the pixels of a region,
- **in that**, for forming the regions, the chrominance values of the pixels are weighted to be stronger than their luminance values, and
- **in that** the formation of the regions with a common chrominance value for all pixels of a region is performed in two steps in such a way that, in a first step, intermediate regions are formed for which both the chrominance values and the luminance values of the pixels are used, and **in that**, in a second step, the regions are formed from the intermediate regions in such a way that the intermediate regions are combined to regions, the intermediate regions having similar chrominance values being combined to a common region having a common chrominance value.

2. A method as claimed in claim 1, **characterized in that** the common chrominance value of a region corresponds to the mean value of the original chrominance values of the pixels assigned to the region.

3. A method as claimed in claim 1 or 2, **characterized in that**, in the first step, a motion estimation of the intermediate regions in an image Iₙ and the subsequent image Iₙ₊₁ is performed for consecutive images, **in that** the new position of the intermediate region in the image Iₙ₊₁ is determined with reference to the motion vectors determined by means of motion estimation for each intermediate region, **in that** subsequently the pixels of the image Iₙ₊₁ belonging to each displaced intermediate region are adapted, **in that** pixels of the image Iₙ₊₁ not covered by said adapted intermediate regions are assigned to one of said intermediate regions or to newly formed intermediate regions, and **in that**, subsequently in the second step, the intermediate regions are combined to regions.

4. A method as claimed in claim 3, **characterized in that**, for consecutive images in an image Iₙ₊₁, the intermediate regions combined in the previous image Iₙ to an assigned region are retraced, while moving intermediate regions between the images Iₙ and Iₙ₊₁ are retraced by means of the motion information, **in that** a merger of said intermediate regions with the same assigned region is attempted, and **in that** a merger with other regions or new regions is performed for those intermediate regions for which said first-mentioned merger fails.

5. A method as claimed in any one of claims 1 to 4, **characterized in that** the chrominance value of each region is represented and encoded by a pair U, V of color difference values.

6. A method as claimed in any one of claims 1 to 5, **characterized in that** the shape of the regions is encoded by means of a chain code in which the position of an initial pixel at the edge of a region is completely encoded and in which the positions of the other pixels at the edge of the region are consecutively encoded, starting from the initial pixel in such a way that the relevant pixel is only encoded on whether it is located to the left, right, above or below the previously encoded pixel.

## Revendications

1. Procédé de segmentation d'images d'un signal vidéo, où, à l'intérieur d'une image, il est procédé à une division de l'image en régions, dans lesquelles des éléments d'image voisins sont réunis, **caractérisé**
- **en ce que**, pour la formation de régions, les valeurs de chromaticité des éléments d'image sont extraites, en ce que les éléments d'image voisins dans une image, qui présentent des valeurs de chromaticité similaires, sont réunis dans une région cohérente, en ce qu'une valeur de chromaticité commune est prévue pour les éléments d'image d'une région,
- **en ce que**, pour la formation des régions, les valeurs de chromaticité des éléments d'image reçoivent une pondération plus élevée que leurs valeurs de luminosité,
- et **en ce que** la formation des régions, dont chacune est **caractérisée par** une valeur de chromaticité commune à tous ses éléments d'image, est opérée en deux étapes de manière que, dans une première étape, des régions intermédiaires soient formées, lors de la génération desquelles aussi bien les valeurs de chromaticité que les valeurs de luminosité des éléments d'image sont extraites, et de manière que, dans une seconde étape, les régions soient formées à partir des régions intermédiaires de manière que les régions intermédiaires soient réunies en régions, où des régions intermédiaires de valeurs de chromaticité similaires sont réunies en une région commune ayant une valeur de chromaticité commune.

2. Procédé selon la revendication 1, **caractérisé en ce que**
la valeur de chromaticité commune d'une région correspond à la valeur moyenne des valeurs de chromaticité d'origine des éléments d'image attribués à la région.

3. Procédé selon la revendication 1 ou 2, **caractérisé en ce que** dans la première étape, pour des images consécutives, il est procédé à une estimation du mouvement des régions intermédiaires dans une image Iₙ et dans l'image subséquente Iₙ₊₁, **en ce que**, au moyen des vecteurs de mouvement établis pour chaque région intermédiaire au moyen de l'estimation du mouvement, la nouvelle position de la région intermédiaire dans l'image Iₙ₊₁ est déterminée, **en ce qu'**il est ensuite procédé à une adaptation des points d'image de l'image Iₙ₊₁ appartenant à chaque région intermédiaire déplacée, **en ce que** des points d'image de l'image Iₙ₊₁ non compris dans ces régions intermédiaires adaptées sont attribués à l'une de ces régions intermédiaires ou à des régions intermédiaires nouvellement formées, et **en ce qu'**ensuite, dans la seconde étape, les régions intermédiaires sont réunies en régions.

4. Procédé selon la revendication 3, **caractérisé en ce que** pour des images consécutives, les régions intermédiaires réunies, dans l'image précédente Iₙ, dans une région associée, sont à nouveau cherchées dans une image Iₙ₊₁, où, entre les images Iₙ et Iₙ₊₁, des régions intermédiaires déplacées à l'aide de l'information sur le mouvement sont retrouvées, **en ce qu'**une union de ces régions intermédiaires dans la même région associée est tentée, et **en ce que**, pour les régions intermédiaires pour lesquelles ceci ne réussit pas, il est procédé à une union à d'autres régions ou à de nouvelles régions.

5. Procédé selon l'une quelconque des revendications 1 à 4, **caractérisé en ce que**
la valeur de chromaticité de chaque région est représentée et codée par une paire de valeurs de différence chromatique U, V.

6. Procédé selon l'une quelconque des revendications 1 à 5, **caractérisé en ce qu'**il est procédé au codage de la forme des régions au moyen d'un code chaîné, où la position d'un élément d'image de sortie du bord d'une région est complètement codée et où les positions des éléments d'image restants du bord de la région sont codées l'une après l'autre en commençant par l'élément d'image de sortie de façon que, chaque fois, le codage ne soit effectué que si l'élément d'image concerné est disposé immédiatement à gauche, immédiatement à droite, au-dessus ou au-dessous de l'élément d'image codé auparavant.
